Europäisches Patentamt

European Patent Office

Office européen des brevets

(11) Veröffentlichungsnummer: **0 370 469 B1**

(12) **EUROPÄISCHE PATENTSCHRIFT**

(45) Veröffentlichungstag der Patentschrift: **26.04.95**

(21) Anmeldenummer: **89121528.7**

(22) Anmeldetag: **21.11.89**

(51) Int. Cl.⁶: **B60T 8/00**, B60T 8/32

(54) **Blockiergeschützte Bremsanlage für einspurige Kraftfahrzeuge.**

(30) Priorität: **23.11.88 DE 3839520**
**05.10.89 DE 3933294**

(43) Veröffentlichungstag der Anmeldung:
**30.05.90 Patentblatt 90/22**

(45) Bekanntmachung des Hinweises auf die
Patenterteilung:
**26.04.95 Patentblatt 95/17**

(84) Benannte Vertragsstaaten:
**DE ES FR GB IT SE**

(56) Entgegenhaltungen:
EP-A- 0 167 782      DE-A- 1 902 944
DE-A- 3 611 822      DE-A- 3 904 512
GB-A- 2 134 200      US-A- 4 868 720

RADMARKT Bd. 98, Nr. 12, 15. Dezember
1987, BIELEFELD (DE) Seiten 73 - 77;HÜTTEN:
'Auch hier mahnt die Physik zu grosser Vorsicht.'

(73) Patentinhaber: **LUCAS INDUSTRIES public limited company**
**Great King Street**
**Birmingham, B19 2XF**
**West Midlands (GB)**

(72) Erfinder: **Pickenhahn, Josef**
**Friedrich-Ebert-Strasse 42**
**D-5472 Plaidt (DE)**
Erfinder: **Barr, Stephen P.J.**
**Im Wiesengrund 19**
**D-5415 Nauort (DE)**
Erfinder: **Beuerle, Christoph**
**Südalle 71**
**D-5400 Koblenz (DE)**
Erfinder: **Glasmacher, Klaus**
**Mittelstrasse 31**
**D-5407 Boppard 5 (DE)**
Erfinder: **Weidele, Alois**
**Dalbergstrasse 17**
**D-6741 Essingen (DE)**
Erfinder: **Fischer, Martin**
**Annastrasse 18**
**D-6106 Erzhausen (DE)**

(74) Vertreter: **von Hellfeld, Axel, Dr. Dipl.-Phys., et
al**
**WUESTHOFF & WUESTHOFF**
**Schweigerstrasse 2**
**D-81541 München (DE)**

## Beschreibung

Die Erfindung betrifft eine blockiergeschützte Bremsanlage für einspurige Kraftfahrzeuge, mit der das Drehverhalten der Fahrzeugräder gemessen und dann, wenn die Drehverzögerung und/oder der Schlupf eines gebremsten Rades vorgegebene Schwellenwerte überschreitet bzw. überschreiten, der Bremsdruck an der Bremse dieses Rades gesenkt, gehalten oder mit kleinerem Anstiegsgradienten als zuvor erhöht wird.

Unter einspurigen Kraftfahrzeugen im Sinne der Erfindung sind insbesondere Motorräder, also Zweirad-Kraftfahrzeuge, zu verstehen.

Eine blockiergeschützte Bremsanlage für einspurige Kraftfahrzeuge ist bereits aus der GB-A-2 134 200 bekannt.

Gegenüber ABS-Anlagen bei Vierrad-Fahrzeugen wirft jedoch das blockiergeschützte Bremsen bei einspurigen Kraftfahrzeugen erhebliche Probleme auf. Bei Kurvenfahrt sind bei Motorrädern Bremsungen wegen der Oberlagerung von Längs- und Querbeschleunigung äußerst problematisch. Ein Rad, das maximale Seitenführungskräfte zwischen Fahrbahn und Fahrzeug überträgt, kann nicht gleichzeitig Längskräfte und damit Bremsleistung übertragen. Somit kann ein Motorrad bei Kurvenfahrt nur mit sehr geringem Bremsdruck, wenn überhaupt, abgebremst werden. Wird ein Rad bei Kurvenfahrt mit zu starkem Bremsdruck abgebremst und gelangt deshalb in einen Blockierzustand, so ist ein Sturz in aller Regel unausweichlich.

In der nicht vorveröffentlichten deutschen Patentanmeldung P 38 38 520.7 wird vorgeschlagen, die Querbeschleunigung als maßgeblichen Parameter für die Einstellung des Schwellenwertes für die ABS-Regelung zu messen.

Es gibt jedoch auch Fahrsituationen, in denen keine Querbeschleunigung auftritt, trotzdem aber eine Bremsung zu erheblichen Problemen führt. Eine solche Situation ist zum Beispiel eine Geradeausfahrt auf einer abschüssigen Fahrbahn. In einer solchen Situation wie auch in einer Kurvenfahrt wandert der Aufstandspunkt des Reifens des Motorrades aus der Mittellinie (vertikale Symmetrieebene) des Motorrades aus. Bremst der Fahrer in einer solchen Situation, also sei es in einer Kurve oder auf schräger Fahrbahn bei Geradeausfahrt, so bewirkt das Bremsmoment aufgrund der asymmetrischen Lage des Reifenaufstandspunktes ein Drehmoment am Lenker des Fahrzeuges, welches so gerichtet ist, daß es das Motorrad aus der Schräglage in die Vertikale aufzurichten bestrebt ist.

Ein solches Lenkmoment ist durch den Fahrer kaum zu beherrschen und führt zu höchst gefährlichen Situationen.

Der Erfindung liegt die Aufgabe zugrunde, eine ABS-Bremsanlage für einspurige Fahrzeuge (Motorräder) zu schaffen, bei der die Sicherheit bei Bremsungen erhöht ist.

Erfindungsgemäß wird diese Aufgabe dadurch gelöst, daß die Schräglage des Kraftfahrzeuges gemessen und in Abhängigkeit von ihr zumindest ein Schwellenwert eingestellt wird.

Bevorzugt wird die Schräglage mit zumindest einem am Kraftfahrzeug befestigten Entfernungsmesser gemessen.

Gemäß einer anderen Ausgestaltung der Erfindung wird die Schräglage dadurch bestimmt, daß zumindest an einem Lager des zweirädrigen Fahrzeuges, bevorzugt am Lager des Vorderrades, links und rechts der Mittellinie (vertikale Symmetrielinie des Fahrzeuges) die Radlasten gemessen und miteinander verglichen werden.

Der Erfindung liegt also die Erkenntnis zugrunde, daß die Fahrsicherheit bei einem Motorrad dadurch erheblich verbessert werden kann, daß eine ansonsten herkömmliche ABS-Bremsanlage so modifiziert wird, daß die in ihr wirksamen Schwellenwerte (welche für die Einleitung eines Bremsdruckabbaus bei einer Bremsung maßgeblich sind) in Abhängigkeit von der Schräglage des Motorrades variiert werden. Befindet sich das Motorrad in Schräglage, so wird erfindungsgemäß verhindert, daß der Fahrer durch eine Bremsung ein so großes Bremsmoment an den Rädern erzeugt, daß das erwähnte Lenkmoment zu einem Sturz führt. Mit zunehmender Schräglage des Motorrades werden die ABS-Schwellenwerte empfindlicher eingestellt, d.h. mit zunehmender Schräglage erfolgt zunehmend früher ein Bremsdruckabbau.

Für die Messung der geometrischen Schräglage eines Motorrades stehen heute ausgereifte Einrichtungen zur Verfügung, insbesondere Entfernungsmeßgeräte aus dem Kamerabau und Ultraschallgeräte aus der Meßtechnik. So ist gemäß einer bevorzugten Ausgestaltung der Erfindung vorgesehen, am Motorrad zumindest einen Entfernungsmesser anzubringen, der den Abstand zum Boden mißt. Kommt das Motorrad in Schräglage, so ändert sich dieser Abstand, was dem Prozessor der ABS-Bremsanlage mitgeteilt wird, so daß dieser, wie oben beschrieben, die Bremsung modifiziert.

Da das bei einer Bremsung in Schräglage an den Rädern auftretende höchst unerwünschte Lenkmoment auch geschwindigkeitsabhängig ist, kann zugleich auch die Geschwindigkeit des Motorrades bei der Einstellung der Schwellenwerte berücksichtigt werden.

Gemäß einer anderen erfindungsgemäßen Lösung der oben erläuterten Probleme ist vorgesehen, daß während einer Fahrt das Auftreten einer Querbeschleunigung gemessen und in Abhängigkeit von der Querbeschleunigung ein für die ABS-Regelung maßgeblicher Schwellenwert verändert wird. Je größer die Querbeschleunigung ist, um so empfindlicher wird der Schwellenwert eingestellt, d.h. die ABS-Regelung spricht früher an als bei geringer oder fehlender Querbeschleunigung.

Bei dieser erfindungsgemäßen Lösung wird der Schwellenwert umgekehrt proportional dem Betrag der gemessenen Querbeschleunigung verkleinert. Die Proportionalität kann unterschiedlichen Funktionen folgen, z.B. kann der für die ABS-Regelung maßgebliche Schwellenwert linear mit dem Betrag der gemessenen Querbeschleunigung verkleinert werden. Es ist auch möglich, den Schwellenwert umgekehrt proportional mit dem Quadrat der gemessenen Querbeschleunigung zu senken oder gemäß einer Exponentialfunktion.

Entsprechendes gilt auch für die oben beschriebene Änderung des Schwellenwertes in Abhängigkeit von der Schräglage.

Bei Vierrad-Fahrzeugen wirft die Messung der Querbeschleunigung wesentlich geringere Probleme auf als bei einspurigen Kraftfahrzeugen. Bei ABS-Bremsanlagen für Vierrad-Fahrzeuge ist es auch bereits bekannt, die Querbeschleunigung des Fahrzeuges bei der ABS-Regelung zu berücksichtigen (siehe DE-A-36 11 822). Die Messung der Querbeschleunigung ist bei Vierrad-Fahrzeugen zum Beispiel mit einfachen mechanischen Einrichtungen, wie einem Pendel oder dergleichen, möglich, weil das Fahrzeug während einer Kurvenfahrt keine die Messung störende Schräglage einnimmt. Ein Motorrad geht aber bei Kurvenfahrt in eine von der Zentrifugalkraft abhängige Schräglage, so daß einfache mechanische Einrichtungen für die Bestimmung der Querbeschleunigung nicht zur Verfügung stehen.

Erfindung gemäß wird deshalb die Querbeschleunigung eines Motorrades für die ABS-Regelung durch eine Messung der Radlasten ermittelt. Die Erfindung macht sich also die Erkenntnis zunutze, daß bei einer Kurvenfahrt nicht nur die Schwerkraft des Fahrers und des Motorrades eine Radlast erzeugen, sondern darüber hinaus auch die Zentrifugalkraft mit einer vom Schrägstellungswinkel des Motorrades abhängigen Komponente die Radlasten vergrößert. Somit kann die Querbeschleunigung in erster Näherung derart gemessen werden, daß die Radlasten des Motorrades zeitabhängig beobachtet werden. Bei Geradeausfahrt wirkt, abgesehen von bei hohen Geschwindigkeiten auftretenden Auftriebskräften, nur das Gewicht des Motorrades und des Fahrers sowie ggf. des Gepäcks als Radlast an den Vorder- und Hinterachsen der beiden Räder. In einer Kurve erhöhen sich die Radlasten als eindeutige Funktion der Querbeschleunigung erheblich und sind somit ein Maß für die Querbeschleunigung. Es wird also das Zeitverhalten der Radlast beobachtet und daraus, wie beschrieben eine Aussage über die Querbeschleunigung gewonnen.

In zweiter Näherung kann die Messung der Querbeschleunigung dadurch verbessert werden, daß bei einer einfachen Messung der Radlasten noch mögliche Fehlerquellen ausgeschlossen werden. So ist es denkbar, daß auf unebener Straße auch bei einer Geradeausfahrt für relativ kurze Zeiten erhöhte Radlasten aufgrund vertikaler Beschleunigungen des Motorrades auftreten. Es versteht sich, daß bei einer derartigen Geradeausfahrt die ABS-Regelung wie bei einer normalen Geradeausfahrt erfolgen, also keine Anpassung an die besonderen Gegebenheiten einer Kurvenfahrt vorgenommen werden soll.

Die geschilderten Radlastschwankungen bei Geradeausfahrt auf unebener Fahrbahn oder auch beim Durchfahren einer Mulde haben aber typischerweise einen anderen Zeitverlauf als Radlasterhöhungen während einer Kurvenfahrt. So sind Radlastschwankungen bei Geradeausfahrt auf unebener Fahrbahn in der Regel relativ kurz und weisen steile Last-Anstiegsgradienten auf. Auch sind die zeitlichen Verläufe der Radlastschwankungen an Vorder- und Hinterrad unterschiedlich. Mit den heute zur Verfügung stehenden programmierbaren ABS-Steuereinrichtungen ist es deshalb möglich, bei der Ermittlung der Querbeschleunigung mittels einer Radlast-Messung solche Störsignale aufgrund Ihres Zeitverhaltens auszufiltern. Beispielsweise wird die Radlast bei einer Kurvenfahrt mit einem flacheren Gradienten ansteigen als bei Geradeausfahrt auf unebener Fahrbahn (z.B. durch ein Schlagloch). Es kann somit im Rechner der ABS-Regelanlage ein Wert für den Gradienten des Anstiegs der Radlasten vorgegeben werden und alle gemessenen Radlaständerungen, deren Anstieg steiler ist als der vorgegebene Gradient, werden als nicht zur Bestimmung der Querbeschleunigung geeignet ausgefiltert, da sie nicht auf eine Kurvenfahrt zurückgehen, sondern auf Störungen während einer Geradeausfahrt.

Eine weitere Verbesserung der erfindungsgemäßen Messung der Querbeschleunigung für eine ABS-Regelung macht sich die Erkenntnis zunutze, daß beim Einleiten einer Kurvenfahrt der Fahrer den Lenker kurzzeitig in die Gegenrichtung bewegt. Eine Kurve, zum Beispiel nach rechts, muß - unabhängig von der Fahrgeschwindigkeit - durch eine kurze Linksdrehung des Lenkers eingeleitet werden. Der kurzzeitige Lenkeinschlag nach links bewirkt eine Linksverschiebung der Verbindungslinie der Radaufstandspunkte auf der Fahrbahn, wodurch die Schwerkraft ein Kippmoment auf das System Fahrer-Motorrad ausübt, so daß sich der Fahrer überhaupt erst in die Schräglage nach rechts begeben kann. Danach wird der Lenker sofort nach rechts eingeschlagen, damit sich ein Kräftegleichgewicht ausbilden kann. Somit geht jeder Kurvenfahrt ein kurzer zeitlicher Lenkausschlag in einer der Kurve entgegengesetzten Richtung voraus. Diese Erkenntnis macht sich die Erfindung in einer besonderen Ausgestaltung zur Messung der Querbeschleunigung zunutze, wobei der zeitliche Verlauf der Stellung des Lenkers des Fahrzeuges gemessen und das Vorliegen einer Querbeschleunigung nicht nur in Abhängigkeit von den gemessenen Radlasten, sondern auch in Abhängigkeit vom zeitlichen Verlauf der Stellung des Lenkers ermittelt wird. Mit anderen Worten: Eine Erhöhung der Radlasten wird in dieser Ausgestaltung der erfindungsgemäßen blockiergeschützten Bremsanlage nur dann als Querbeschleunigung mit einer entsprechenden Senkung des Schwellenwertes interpretiert, wenn vor Auftreten der erhöhten Radlast der Lenker während einer Zeitspanne, die kürzer ist als ein vorgegebener Wert, in eine Richtung ausgelenkt worden ist, die derjenigen Richtung entgegengesetzt ist, die der Lenker während der Erhöhung der Radlast einnimmt.

Für das Messen der Radlasten stehen dem Fachmann die erforderlichen Hilfsmittel zur Verfügung. So sind zum Beispiel Kraftmeßlager bekannt (Schrift "Kraftmeßregler; Funktionsweise der Kraftmessung und Montage" der Firma FAG; Kraftmeßsystem MGZ, Publikationsnummer WL 55130/2). Bekannte Kraftmeßlager bestehen aus einem Kraftmeßgehäuse und einem darin eingebauten Wälzlager. Sie erfüllen gleichzeitig zwei Aufgaben, nämlich die Lagerung der Wellen sowie die Messung der Belastung. Bei einem bekannten Kraftmeßlager dieser Art kann die Radlast mit Dehnungsmeßstreifen gemessen und in elektrische Signale umgesetzt werden.

In besonders einfacher Weise kann die Radlast aber bei einer anderen Ausgestaltung der Erfindung dadurch gemessen werden, daß die Kompression der Federung des Motorrades gemessen wird. Eine mechanische Federung wird bei Erhöhung der Radlast, also z.B. bei Auftreten einer Querbeschleunigung in einer Kurve, komprimiert und der Betrag der Kompression ist ein Maß für die Radlast und somit die Querbeschleunigung. Weist das Motorrad eine luftdruckunterstützte Federung auf, so kann die Radlast in besonders einfacher Weise auch dadurch ermittelt werden, daß der Gasdruck in den Gasfedern gemessen wird.

In einer besonders bevorzugten Ausgestaltung der erfindungsgemäßen, blockiergeschützten Bremsanlage wird die Querbeschleunigung dadurch ermittelt, daß am Lager des Vorderrades des Motorrades links und rechts der Mittellinie des Fahrzeuges jeweils die Radlasten getrennt gemessen und miteinander verglichen werden. Bei einer Kurvenfahrt wandert nämlich der Berührungspunkt zwischen dem Reifen und der Fahrbahn aus der Mittellinie des Fahrzeuges aus und es entsteht ein Kippmoment am Rad, welches ebenfalls eine eindeutige Funktion der am schräggestellten Fahrzeug wirkenden Zentrifugalkraft und damit der Querbeschleunigung ist.

Nachfolgend werden Ausführungsbeispiele der Erfindung anhand der Zeichnung näher erläutert. Es zeigt:

Fig. 1 ein einspuriges Kraftfahrzeug in Normalstellung;

Fig. 2 ein einspuriges Kraftfahrzeug in Schräglage mit einem ersten Ausführungsbeispiel einer Einrichtung zum Messen der Schräglage;

Fig. 3 ein einspuriges Kraftfahrzeug in Schräglage mit einem zweiten Ausführungsbeispiel einer Vorrichtung zum Messen derselben;

Fig. 4 die bei einer Kurvenfahrt eines Motorrades auftretenden Kräfte;

Fig. 5 den Zusammenhang der bei einer Kurvenfahrt möglichen Seitenführungs- und Bremskräfte;

Fig. 6a eine Seitenansicht eines Motorrades;
6b einen zeitlichen Verlauf eines Lenkwinkels bei Kurvenfahrt

Fig. 7 unterschiedliche Stellungen eines Rades in bezug auf eine Fahrbahn;

Fig. 8 die bei einer Schrägstellung gemäß Fig. 6b auftretenden, für die Berechnung eines Kippmomentes maßgeblichen Linien und Winkel; und

Fig. 9 Einzelheiten der Berechnung des Kippmomentes an einem Vorderrad.

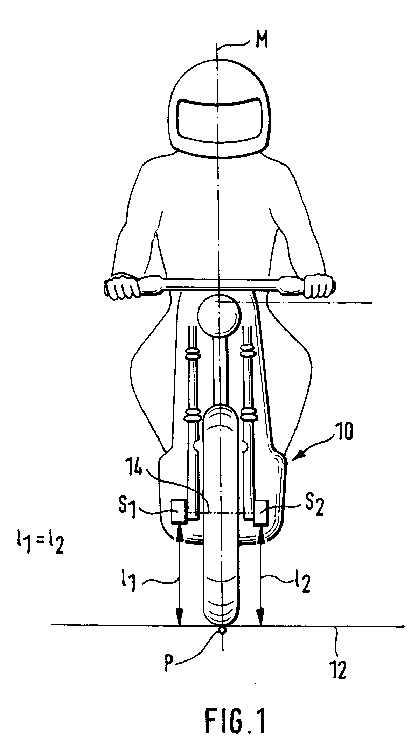

Ein Motorrad 10 fährt auf einer Fahrbahn 12, wobei der Reifen des Motorrades mit der Fahrbahn 12 im Punkt P in Berührung steht. In Fig. 1 fährt das Motorrad 10 ohne Schräglage geradeaus. Die Mittellinie M steht senkrecht zur Fahrbahn 12 und die Achsen 14 der Räder verlaufen parallel zur Fahrbahn 12.

Im Bereich der Achsen des Motorrades sind Sensoren $S_1$, $S_2$ angeordnet, welche den Abstand $l_1$ bzw. $l_2$ zur Fahrbahn 12 ermitteln. Die entfernungsmessenden Sensoren $S_1$, $S_2$ sind herkömmlicher Bauart und können zum Beispiel optisch oder akustisch ausgestaltet sein. Entfernungsmeßgeräte können als insbesondere aus dem Kamerabau bekannt vorausgesetzt werden.

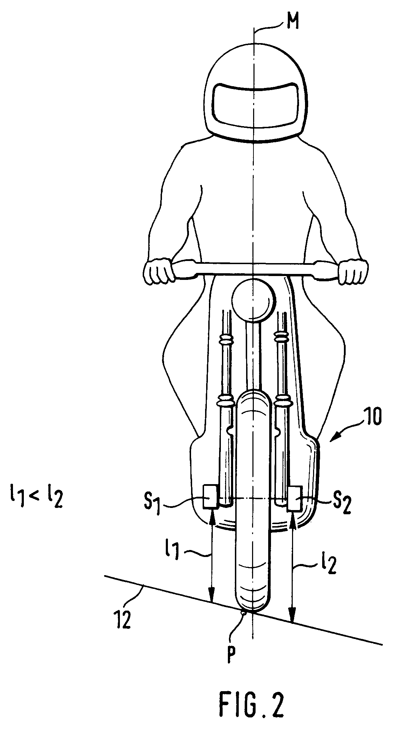

In der Stellung gemäß Fig. 2 nimmt das Motorrad 10 eine Schräglage ein. Die Fahrsituation gemäß Fig. 2 kann zum Beispiel bei Geradeausfahrt quer zu einem Schräghang auftreten. Eine Querbeschleunigung tritt in dieser Fahrsituation nicht auf. Die Schräglage wird mittels der Sensoren $S_1$, $S_2$ ermittelt. Ein Rechner vergleicht die gemessenen Abstände $l_1$ und $l_2$ und errechnet hieraus die Schräglage.

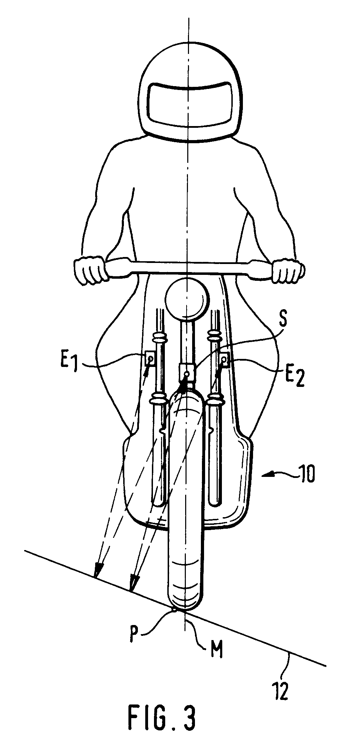

Die Fahrsituation gemäß Fig. 2 entspricht hinsichtlich der Relativstellung der Mittellinie M und der Fahrbahn 12 auch einer Kurvenfahrt. Wie den Fig. 2 und 3 zu entnehmen ist, wandert der Berührungspunkt P zwischen den Reifen und der Fahrbahn 12 aus der Mittellinie M heraus. Bremst in dieser Situation der Fahrer, so entsteht am Lenkrad aufgrund der asymmetrischen Lage des Berührungspunktes P ein Drehmoment, das bestrebt ist, das Motorrad so aufzurichten, daß die Mittellinie M senkrecht auf der Fahrbahn 12 steht. Dieses Lenkmoment ist vom Fahrer kaum zu beherrschen. Überdies ist bei Kurvenfahrt auch in aller Regel die Seitenführungskraft der Reifen geringer als bei Geradeausfahrt.

Deshalb wird bei Ermittlung einer Schräglage mittels der Sensoren $S_1$, $S_2$ der für einen Druckabbau im Zuge einer ABS-Regelung maßgebliche Schwellenwert empfindlicher eingestellt, so daß bei einer Bremsung in Schräglage der Bremsdruck schneller als sonst abgebaut wird und sich das Drehmoment am Lenkrad nicht in gefährlichem Maße ausbilden kann.

Fig. 3 zeigt eine Abwandlung der Sensoren. Der Sender S ist mittig, d.h. in der Mittelebene M des Motorrades 10 angeordnet und emittiert Kugelwellen. Symmetrisch links und rechts des Senders S sind Empfänger $E_1$, $E_2$ angeordnet. Bei Schräglage sind die Laufstrecken vom Sender S zu den beiden Empfängern $E_1$, $E_2$ unterschiedlich, was bei Pulsbetrieb zur Ermittlung der Schräglage ausgenutzt werden kann.

In Abwandlung der vorstehend beschriebenen Ausführungsbeispiele ist es auch möglich, mittels eines einzigen Entfernungsmeßgerätes die Schräglage zu ermitteln, da gegenüber einer Geradeausfahrt bei einer Schräglage der Abstand jedes Punktes des Motorrades gegenüber dem Boden geringer wird. Eine solche Messung hat jedoch den Nachteil, daß unterschiedliche Reifenzustände nicht berücksichtigt werden können.

Die Messung zweier Abstände links und rechts der Mittellinie M des Motorrades hat den Vorteil, daß durch Vergleich der beiden gemessenen Werte eine erhöhte Meßsicherheit gegeben ist.

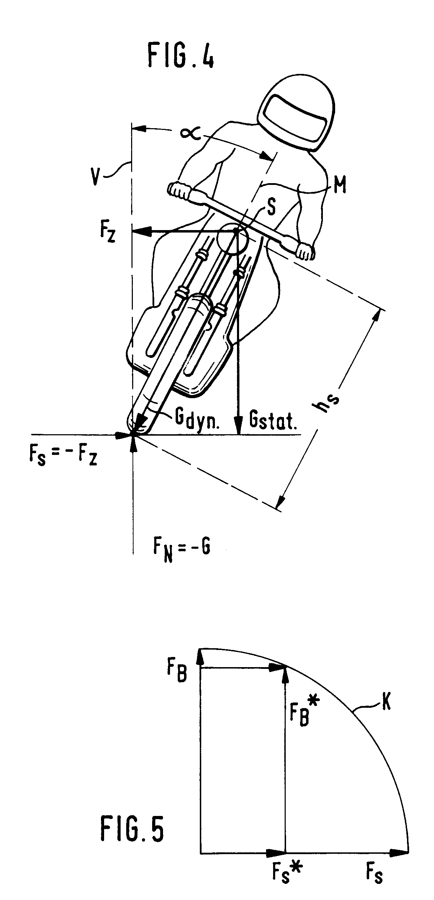

Die Fig. 4 bis 6 dienen der Erläuterung eines anderen Ausführungsbeispiels der Erfindung, bei dem nicht direkt die Schräglage des Motorrades gemessen wird, sondern seine Querbeschleunigung. Eine Messung der Querbeschleunigung wird im Vergleich mit einer Messung der geometrischen Schräglage (mittels eines Entfernungsmessers) als ungünstiger angesehen. Gleichwohl kann aber auch die Messung einer Querbeschleunigung brauchbare Ergebnisse liefern.

Fig. 4 zeigt ein Motorrad bei Kurvenfahrt. Der Schwerpunkt des Systems Motorrad/Fahrer (und ggf. Gepäck) ist mit S bezeichnet. Er liegt auf der Mittellinie M des Systems Motorrad/Fahrer.

Aufgrund der Masse des Motorrades und des Fahrers wird die Schwerkraft $G_{stat}$ erzeugt. In der Kurve bildet die Mittellinie M mit der Vertikalen V den Schrägstellungswinkel $\alpha$. Die Zentrifugalkraft $S_z$ steht senkrecht zur Vertikalen. Die Seitenführungskraft $F_s$ entspricht, bis auf das umgekehrte Vorzeichen, der Zentrifugalkraft $F_z$. Die in vertikaler Richtung wirksame Kraft $F_N$ zwischen Reifen und Fahrbahn entspricht dem Gewicht $G_{stat}$ von Motorrad und Fahrer.

Das bei Geradeausfahrt oder in Ruhestellung wirksame Gewicht $G_{stat}$ von Motorrad und Fahrer erzeugt auch die bei Geradeausfahrt bzw. Ruhe wirksamen Radlasten an den Achsen von Vorder- und Hinterrad des Motorrades. Bei hohen Geschwindigkeiten auftretende Auftriebskräfte können hier zunächst vernachlässigt werden.

In der Kurve erhöht sich die an den Achsen der Räder wirksame Radlast entsprechend dem "dynamischen" Gewicht $G_{dyn}$ und die Zentrifugalkraft kann gemäß Fig. 1 wie folgt berechnet werden:

$$F_z = \sqrt{G_{dyn}^2 - G_{stat}^2}$$

Die Zentrifugalkraft $F_z$ entspricht, wie oben erläutert, der Seitenführungskraft. Die Zentrifugalkraft hängt mit der Querbeschleunigung über die bekannte Gleichung Kraft = Masse x Beschleunigung zusammen.

Mißt man also bei einem Motorrad während des Anfahrvorganges bei geringen Geschwindigkeiten von z.B. weniger als 6 km/h die Summe der Radlasten an den Vorder- und Hinterrädern des Motorrades, und speichert diese Werte ab, so kann bei höheren Geschwindigkeiten in einer Kurve die Erhöhung der Radlasten gemäß dem dynamischen Gewicht $G_{dyn}$ und aus der vorstehenden Gleichung die Zentrifugalkraft und somit die Querbeschleunigung ermittelt werden.

Wie oben ausgeführt ist, hängen die bei einer Bremsung in einer Kurve maximal möglichen Seitenführungskräfte $F_s$ und Bremskräfte $F_B$ voneinander ab. Dieser Zusammenhang ist im sogenannten Kamm'schen Reibkreis dargestellt (siehe Zeitschrift ATZ, 1969, S. 182). Je größer die Seitenführungskraft $F_s$ ist, umso geringer ist die zugehörige maximale Bremskraft, die der Reifen auf die Fahrbahn übertragen kann. Dies ist in Fig. 5 dargestellt, welche ein "erlaubtes" Paar von Seitenführungskräften $F_s^*$ und $F_B^*$ zeigt. Wie Fig. 5 zeigt, setzen sich Bremskraft und Seitenführungskraft zu einer Resultierenden zusammen, die innerhalb des Kraftschlußkreises K liegt. Überschreitet die Resultierende diesen Kreis, so blockiert das Rad. Dadurch würde es praktisch jede Seitenführungskraft verlieren und das Motorrad würde unaufhaltsam wegrutschen. Je größer die in Anspruch genommene Seitenführungskraft $F_s$ ist, umso geringer ist die noch mögliche Bremskraft $F_B$.

Es versteht sich, daß die maximal möglichen Seitenführungs- und Bremskräfte nicht durch die vorstehenden Betrachtungen erschöpfend beschrieben sind. Maßgeblich ist darüber hinaus noch der Haftbeiwert $\mu$ zwischen Reifen und Fahrbahn. Die Messung des Haftbeiwertes $\mu$ ist schwierig und aufwendig. Falls eine solche Messung des Haftbeiwertes erfolgt, kann die noch zur Verfügung stehende Bremskraft genau bestimmt werden. Für die hiesigen Zwecke reicht es deshalb, einen Mindesthaftbeiwert von z.B. $\mu = 0,6$ anzusetzen. Geringere Haftbeiwerte können in der Praxis vernachlässigt werden, da bei Motorrädern ein Aquaplaning ausgeschlossen werden kann. Wenn es dazu kommt, hilft sowieso nichts mehr.

Somit ist man auf der sicheren Seite, wenn man die gemäß obiger Formel aus den Veränderungen der Radlasten ermittelte Seitenführungskraft $F_s$, die dem Betrag der Zentrifugalkraft $F_z$ entspricht, mit einem angenommenen Mindest-Haftbeiwert von $\mu = 0,6$ multipliziert.

Der in Fig. 5 dargestellte Kamm'sche Reibkreis K liefert dann bei einer gegebenen Seitenführungskraft den maximal noch verbleibenden Bremskraftanteil $F_B^*$ wie folgt:

$$F_B^* = \sqrt{F_B^2 - F_s^{*2}},$$

wobei $F_B$ die mögliche Bremskraft bei Geradeausfahrt ist. Somit ist in einer Kurvenfahrt die zur Verfügung stehende Bremskraft gemäß der vorstehenden Gleichung aufgrund der in der Kurvenfahrt erforderlichen Seitenführungskraft stark reduziert. Wie oben erläutert, entspricht die Seitenführungskraft aufgrund der als konstant anzusehenden Masse der Querbeschleunigung. Damit der in Fig. 5 gezeigte Kamm'sche Reibkreis K nicht überschritten wird, muß deshalb bei einer ABS-Regelung in einer Kurve der für den Druckabbau (oder dessen Konstanthaltung oder den Wechsel auf einen Druckanstieg mit kleinerem Anstiegsgradienten) maßgebliche Schwellenwert bezüglich der Drehverzögerung des gebremsten Rades bzw. seines Schlupfes wesentlich empfindlicher eingestellt, d.h. verkleinert werden.

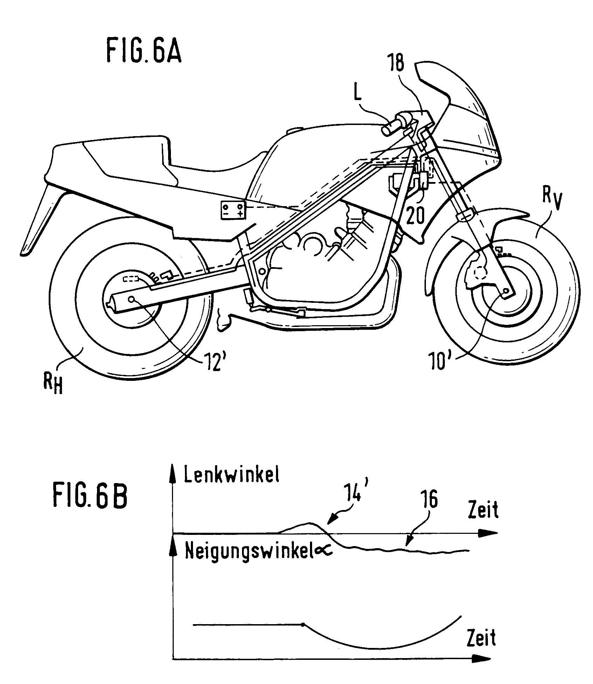

Gemäß einem ersten, einfachen Ausführungsbeispiel der Erfindung ist deshalb bei einem in Fig. 6 gezeigten Motorrad vorgesehen, daß an den Achsen der Vorder- und Hinterräder $R_V$ bzw. $R_H$ jeweils Meßgeräte 10' bzw. 12' für die Radlast angeordnet sind. Als Meßgeräte kommen insbesondere die eingangs erwähnten Kraftmeß lager in Frage, bei denen mittels eines Dehnungsmeßstreifens die jeweils wirksame Radlast ermittelt und in elektrisches Signal umgesetzt wird. Aus den gemessenen Radlasten wird in der oben beschriebenen Weise die Seitenführungskraft (Querbeschleunigung) ermittelt und der für eine ABS-Regelung maßgebliche Schwellenwert wird umgekehrt proportional zur Größe der ermittelten Querbeschleunigung verkleinert, d.h. empfindlicher eingestellt.

Die optimale Einstellung kann experimentell für ein gegebenes Motorrad ermittelt werden.

In einer Weiterbildung des vorstehend beschriebenen Ausführungsbeispieles der Erfindung wird zusätzlich zu den gemessenen Radlasten noch der zeitliche Verlauf des am Lenker L des Motorrades eingestellten Lenkwinkels beobachtet. Fig. 6b zeigt einen typischen Verlauf des Lenkwinkels und des Neigungswinkels (Fig. 4) bei einer Kurvenfahrt über einen gemeinsamen Zeitachse. Wie oben erläutert, muß der Fahrer (unbewußt) vor Einleitung der Kurvenfahrt den Lenker L kurzzeitig in eine Richtung drehen, die der beabsichtigten Kurvenrichtung entgegengesetzt ist. Dieser Einschlag des Lenkwinkels in die entgegengesetzte Richtung ist in Fig. 6b mit 14' bezeichnet. Zum Ausfiltern von Radlastschwankungen, die nicht auf eine Kurvenfahrt zurückzuführen sind, wird der zeitliche Verlauf des Lenkwinkels beobachtet und dann, wenn er etwa dem in Fig. 6b gezeigten Verlauf entspricht, wird angenommen, daß auftretende Radlaständerungen auf eine Kurvenfahrt zurückgehen. Es wird also im Rechner der ABS-Anlage kontinuierlich der mit dem Lenker L eingeschlagene Lenkwinkel verfolgt und für jeweils gegebene Zeitspannen abgespeichert, z.B. für jeweils die letzten 10 Sekunden. Wird dann während eines Lenkwinkeleinschlages, der dem Bereich 16 gemäß Fig. 6b entspricht, eine Erhöhung der Radlasten an der Vorder- und Hinterrädern des Motorrades festgestellt und gleichzeitig ermittelt, daß eine vorgegebene Zeitspanne zuvor ein Lenkwinkeleinschlag in die entgegengesetzte Richtung gemäß dem Abschnitt 14 stattgefunden hat, der kürzer war, als eine vorgegebene Zeitspanne von z.B. 1 Sekunde, so wird auf eine Kurvenfahrt geschlossen und in der oben beschriebenen Weise aus der Änderung der Radlasten die Querbeschleunigung ermittelt und entsprechend der Schwellenwert für die ABS-Regelung empfindlicher eingestellt, damit im Vergleich mit einer Geradeausfahrt bei einer Bremsung entsprechend früher der Bremsdruck im Bremszylinder der Räder abgesenkt und ein Blokkieren des Rades verhindert wird.

Nach Einleiten einer derartigen ABS-Bremsregelung wird der zunächst in der beschriebenen Weise herabgesetzte Schwellenwert wieder allmählich erhöht, da inzwischen Bremswirkung erzielt ist und somit die Querbeschleunigung verringert wurde. Durch die Erhöhung des Schwellenwertes kann die zu erzielende Bremsleistung verbessert werden.

Bei sehr hohen Motorradgeschwindigkeiten treten Auftriebskräfte auf, welche die Wechselwirkungskräfte zwischen Reifen und Fahrbahn vermindern, also die Wirkung eines verschlechterten Haftbeiwertes $\mu$ haben. In solchen Fällen muß die ABS-Regelung noch empfindlicher eingestellt werden. Es ist deshalb in einer weiteren Ausgestaltung des vorstehend beschriebenen Ausführungsbeispieles vorgesehen, den Schwellenwert bei sehr hohen Geschwindigkeiten noch weiter zu reduzieren.

Es versteht sich, daß die vorstehend bei allen Ausführungsbeispielen beschriebenen Änderungen des Schwellenwertes sich auf diejenigen Schwellenwerte beziehen, die bei bekannten Motorrad-ABS-Regelanlagen für Geradeausfahrt angesetzt werden.

Empirische Untersuchungen haben ergeben, daß bei extremen Schräglagen eines Motorrades in einer Kurve, wenn praktisch die gesamte Reifenführungskraft für die Seitenführung aufgebraucht wird, der Schwellenwert gegenüber Geradeausfahrt ganz erheblich gesenkt werden muß. Während bei einer Geradeausfahrt z.B. Schlupfwerte von 30 bis 35 % eine optimale Bremsung ermöglichen (der Bremskraftbeiwert ist eine bekannte Funktion des Bremsschlupfes, siehe z.B. die oben zitierte Zeitschrift ATZ, S. 182), ist bei einer starken Querbeschleunigung nur noch ein maximaler Bremsschlupf von z.B. 1 % erlaubt. Der Schwellenwert bezüglich des Bremsschlupfes muß also in diesem Falle z.B. auf 1/30 des Schwellenwertes bei Geradeausfahrt eingestellt werden.

Um eine erfindungsgemäße ABS-Regelanlage zu realisieren, braucht ein herkömmliches Motorrad-ABS-System nur geringfügig ergänzt zu werden. Es bedarf der bereits beschriebenen Meßgeräte 10', 12' für die Radlasten und eines Sensors 18 für den Lenkwinkel (Fig. 6). Die Meßwerte der Radlast-Meßgeräte 10, 12 und des Lenkwinkelsensors 18 werden ständig in einem vorgegebenen Zeittakt von z.B. 2 ms erfaßt und in den ABS-Rechner 20 eingegeben. Aus der Summe der Radlasten ergibt sich das oben beschriebene dynamische Gewicht $G_{dyn}$ und daraus die Querbeschleunigung. Der Rechner ermittelt also gemäß dem mittels der Radlast-Meßgeräte 10', 12' ermittelten dynamischen Gewicht $G_{dyn}$ einen zugehörigen Schwellenwert für die ABS-Regelung. Dabei kann er so programmiert sein, daß er zum einen das oben beschriebene Zeitverhalten des Lenkwinkels (Fig. 6b) und/oder auch die oben beschriebenen Anstiegsgradienten des dynamischen Gewichtes berücksichtigt und solche Zustände als nicht zu einer Kurvenfahrt gehörig ausfiltert, denen kein Lenkwinkelverhalten gemäß Fig. 6b zugeordnet werden kann oder bei denen die Radlast gemäß einem Gradienten ansteigt, der steiler ist als ein vorgegebener Wert.

Bei sehr hohen Querbeschleunigungen von z.B. mehr als 4 m/s$^2$ wird zusätzlich noch der Druckanstiegsgradient in dem Bremszylinder verringert. Dies kann in bekannter Weise durch getaktetes (gepulstes) Einschießen des Bremsdruckes in den Bremszylinder erfolgen.

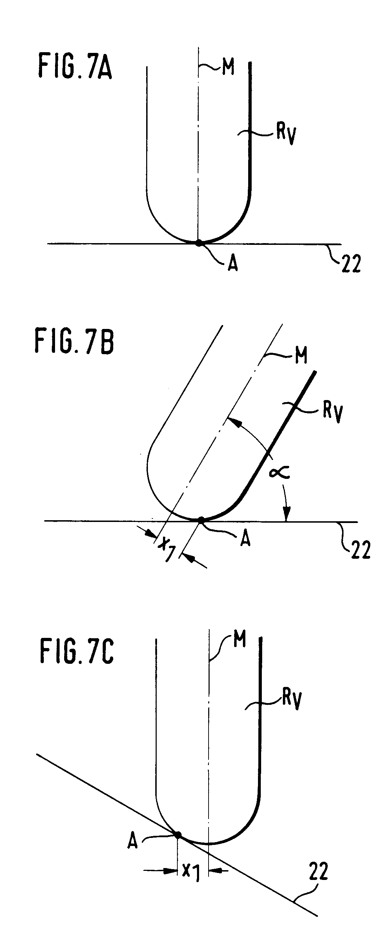

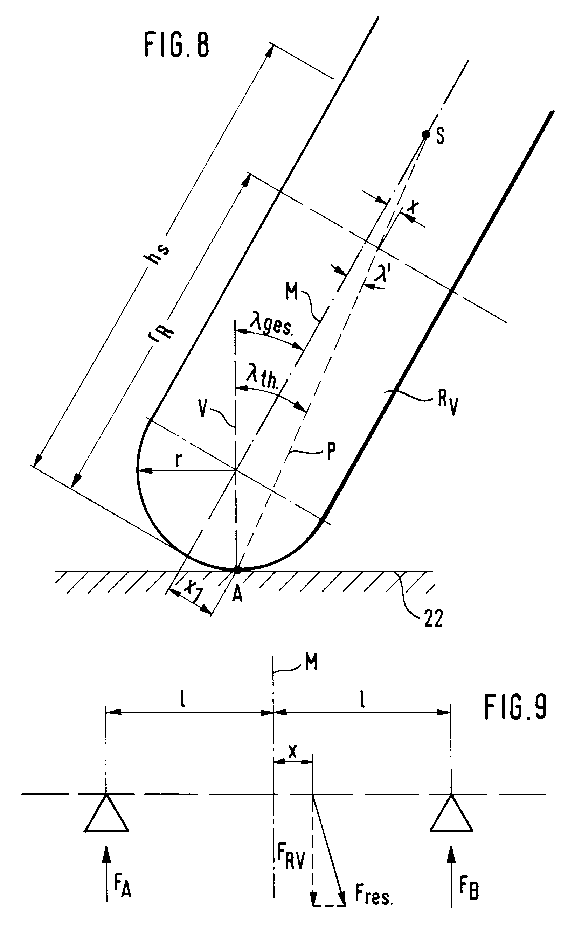

Die Fig. 7 und 8 illustrieren ein weiteres Ausführungsbeispiel einer erfindungsgemäß blockiergeschützten Bremsanlage für Motorräder, bei dem die Querbeschleunigung des Motorrades anders als bei den vorstehend beschriebenen Ausführungsbeispielen gemessen wird. Die nachfolgend beschriebene Ermittlung der Querbeschleunigung kann aber mit den oben beschriebenen kombiniert werden, falls erwünscht. Sie kann auch zur Schräglagenbestimmung herangezogen werden.

Fig. 7 zeigt unterschiedliche Stellungen eines Rades eines einspurigen Kraftfahrzeuges gemäß Fig. 6 in bezug auf die Fahrbahn 22. Bei Geradeausfahrt gemäß Fig. 7a steht die Mittellinie M (siehe Fig. 4) senkrecht auf der Fahrbahn 22. In einer Kurve steht die Mittellinie M gemäß Fig. 7b in einem Winkel $\alpha$ zur Fahrbahn. Dabei wandert der Berührungspunkt A aus der Mittellinie M heraus. Insbesondere bei modernen Breitreifen, wie sie für Motorräder zunehmend Verwendung finden, wandert der Berührungspunkt A um eine Strecke $x_1$ aus der Mittellinie M, die zu einem erheblichen Kippmoment um das Rad führt. Die Schräglage gemäß Fig. 7b führt zu einem Eigenlenkverhalten des Rades. Die Bremskraft bewirkt mit dem zur Lenkachse senkrechten Hebelarm $x_1$ ein Lenkmoment, das bestrebt ist, das Vorderrad zur Kurveninnenseite zu drehen. Dies führt dazu, daß das Motorrad bestrebt ist, sich aufzurichten und dadurch in Richtung zur Kurvenaußenseite zu gelangen. Der Fahrer muß dem durch eine Gegenlenkkraft entgegenwirken. Umgekehrt bewirkt ein Lösen der Bremse in der Kurve einen plötzlichen Wegfall des Lenkmomentes und der Fahrer meint, mit dem Motorrad in die Kurveninnenseite zu "fallen", was er wiederum durch Gegenlenken ausgleichen muß.

Das vorstehend beschriebene Eigenlenkverhalten stört die nachfolgenden Betrachtungen nicht. Es wird vorausgesetzt, daß der Fahrer in der üblichen Weise gegenlenkt und somit in einer Kurve das Fahrzeug in der Position gemäß Fig. 7b hält. Fig. 8 zeigt weitere Einzelheiten. Der Winkel $\lambda_{ges}$, den die Vertikale V mit der Mittellinie M des Reifens $R_v$ bildet, ist kleiner, als der Winkel $\lambda_{th}$, den die Vertikale V mit der Verbindungslinie P zwischen dem Schwerpunkt S und dem Berührungspunkt A bildet. Daraus ergibt sich, daß an den linken und rechten Lagerpunkten des Vorderrades (und entsprechend des Hinterrades) unterschiedliche Lagerkräfte auftreten, die eine genaue Aussage über die Schräglage des Motorrades ermöglichen. Dabei ist es unerheblich, ob das Motorrad gemäß Fig. 7b in einer Kurve fährt oder gemäß fig. 7c die Fahrbahn zur Vertikalen V geneigt ist, oder ob eine Kombination dieser Zustände vorliegt.

Einfache geometrische und mechanische Überlegungen zeigen, daß gemäß Fig. 9 sich die Lagerkräfte wir folgt berechnen lassen:

$$F_A = F_{RV} \times (I - X)/2I$$
$$F_B = F_{RV} \times (I + X)/2I$$

und

$$X = \tan\lambda' \times (hs - r_R),$$

wobei folgende Bezeichnungen gelten:

| | | |
|---|---|---|
| hs | = | Höhe des Schwerpunktes |
| $v_R$ | = | Radhalbmesser |
| $x_1$ | = | Abstand des Berührungspunktes A von der Mittellinie M |
| $\lambda_{ges}$ | = | Neigungswinkel des Fahrzeuges |
| $\lambda_{th}$ | = | Winkel der Fahrzeug-Mittellinie M mit der Verbindungslinie zwischen Schwerpunkt S und Berührungspunkt A |
| $\lambda'$ | = | Abweichung der Schwerpunktlinie von der Mittellinie |
| X | = | Abstand des Radlastangriffspunktes auf der Vorderachse |
| $F_A$ | = | Lagerkraft links |
| $F_B$ | = | Lagerkraft rechts |
| $F_{res}$ | = | Radlast |
| $F_{RV}$ | = | vertikaler Anteil der Radlast |
| I | = | Abstand der Mittellinie vom Achslager |

Der links und rechts der Mittellinie werkenden Lagerkräfte können in idealer Weise durch gesonderte, links und rechts vorgesehene Kraftmeßlager der oben beschriebenen Bauart realisiert werden.

Eine einfachere Lösung sieht vor, daß die Kräfte am Radlager links und rechts der Mittellinie M über die Verbiegung der Achse kurz vor den Lagerpunkten gemessen werden, falls eine feststehende Achse verwendet wird.

Es ist auch möglich, ähnlich der oben beschriebenen einfachen Messung der Radlast, die unterschiedliche Kompression von links und rechts der Mittellinie M angeordneten Dämpfungsfedern zu messen oder auch gegebenenfalls den unterschiedlichen Druck in Gasfedern zu ermitteln und daraus auf eine asymmetrische Kraftverteilung und somit Querbeschleunigung zu schließen. Die Eichung des Systems ist, wie oben beschrieben, einfach. Mit einem gegebenen Motorrad wird in vorgegebener Geschwindigkeit eine Kurve mit gegebenem Radius durchfahren und dabei werden die links und rechts unterschiedlichen Kompressionswerte der Federn gemessen. Somit können den Kompressionswerten jeweils ganz bestimmte Querbeschleunigungswerte zugeordnet werden.

In einer weiteren Ausbildung der vorstehend beschriebenen Ausführungsbeispiele ist vorgesehen, den Schwellenwert nach einer vorgebenen Zeitspanne, die der menschlichen Reaktionszeit entspricht, also z.B. 1 Sekunde, überproportional anzuheben. In einer extremen Kurvenlage kann hiermit ein erfahrener Motorradfahrer bei einer Bremsung aufgrund eines stärkeren Pulsierens am Brems-Handhebel und eines veränderten Bremsverhaltens feststellen, daß eine Schräglagenkorrektur oder eine Bremskraftkorrektur vorzunehmen ist. Diese Schwellenwertänderung gibt dem Fahrer in einer Extremlage auch die Möglichkeit, einen Sturz bewußt durch verstärktes Bremsen herbeizuführen, wobei er sich dann von der Maschine trennen kann.

Die vorstehend anhand einer Messung der Querbeschleunigung beschriebenen Modifikationen einer ABS-Regelung können auch ohne weiteres angewandt werden auf die oben anhand der Figuren 1 bis 3 beschriebene Modifikation der ABS-Regelung aufgrund einer direkten Schräglagenmessung mit Hilfe eines Entfernungsmessers.

**Patentansprüche**

1. Blockiergeschützte Bremsanlage für einspurige Kraftfahrzeuge (10), mit der das Drehverhalten der Fahrzeugräder gemessen und dann, wenn die Drehverzögerung und/oder der Schlupf eines gebremsten Rades vorgegebene Schwellenwerte überschreitet bzw. überschreiten, der Bremsdruck an der Bremse dieses Rades gesenkt, gehalten oder mit kleinerem Anstiegsgradienten als zuvor erhöht wird,
   dadurch **gekennzeichnet**,
   daß die Schräglage des Kraftfahrzeuges (10) bezüglich der Fahrbahn (12) gemessen und in Abhängigkeit von ihr zumindest ein Schwellenwert verändert wird.

2. Bremsanlage nach Anspruch 1,
   dadurch **gekennzeichnet**,
   daß die Schräglage mit zumindest einem am Kraftfahrzeug (10) befestigten Entfernungsmesser [$S_1$, $S_2$] gemessen wird.

3. Bremsanlage nach Anspruch 1,
   dadurch **gekennzeichnet**,
   daß zur Ermittlung der Schräglage an zumindest einem Radlager (10', 12') des Kraftfahrzeuges links und rechts der Mittellinie des Fahrzeuges (10) die Radlasten gemessen und miteinander verglichen werden.

**4.** Bremsanlage nach einem der vorhergehenden Ansprüche,
dadurch **gekennzeichnet**,
daß mit zunehmender Schräglage des Kraftfahrzeugs der Schwellenwert empfindlicher eingestellt wird.

**5.** Blockiergeschützte Bremsanlage für einspurige Kraftfahrzeuge, mit der das Drehverhalten der Fahrzeugräder gemessen und dann, wenn die Drehverzögerung und/oder der Schlupf eines gebremsten Rades vorgegebene Schwellenwerte überschreitet bzw. überschreiten, der Bremsdruck an der Bremse dieses Rades gesenkt, gehalten oder mit kleinerem Anstiegsgradienten als zuvor erhöht wird,
dadurch **gekennzeichnet**,
daß durch eine Einrichtung (10', 12') zur Messung der Radlasten die Querbeschleunigung des Kraftfahrzeuges (10) ermittelt wird und daß bei Auftreten einer Querbeschleunigung am Fahrzeug (10) zumindest ein Schwellenwert verändert wird.

**6.** Bremsanlage nach Anspruch 5,
dadurch **gekennzeichnet**,
daß zur Ermittlung der Querbeschleunigung an zumindest einem Radlager (10', 12') des Kraftfahrzeuges links und rechts der Mittellinie des Fahrzeuges die Radlasten getrennt gemessen und miteinander verglichen werden.

**7.** Bremsanlage nach Anspruch 5 oder 6,
dadurch **gekennzeichnet**,
daß der Schwellenwert mit zunehmender Querbeschleunigung des Fahrzeuges empfindlicher eingestellt wird.

**8.** Bremsanlage nach einem der vorhergehenden Ansprüche,
dadurch **gekennzeichnet**,
daß der zeitliche Verlauf der Stellung eines Lenkers das Fahrzeugs gemessen (18) und das Vorliegen eine Schräglage und/oder Querbeschleunigung des Kraftfahrzeuges (10) in Abhängigkeit davon ermittelt wird.

**9.** Bremsanlage nach einem der Ansprüche 3, 5, 6, 7 oder 8,
dadurch **gekennzeichnet**,
daß die Radlasten in Abhängigkeit von mittels Drucksensoren (10', 12') gemessenen Drucken ermittelt werden.

**10.** Bremsanlage nach einem der Ansprüche 3, 5, 6, 7, 8 oder 9,
dadurch **gekennzeichnet**,
daß zur Messung der Radlasten Lastsensoren (10', 12') dienen.

**Claims**

**1.** An anti-lock brake system for single-track motor vehicles (10) to measure the rotational behavior of the wheels of the vehicle and then to lower, maintain, or raise at a smaller gradient than before the brake pressure of the brake at a wheel being retarded if the rotational retardation and/or the slip of said braked wheel surpass(es) given threshold values,
**characterized** in that
the inclination of the motor vehicle (10) with respect to the roadway (12) is measured and at least one threshold value is adjusted in response to said inclination.

**2.** The brake system as claimed in claim 1,
**characterized** in that the inclination is measured by at least one distance meter (S1, S2) mounted on the motor vehicle.

**3.** The brake system as claimed in claim 1
**characterized** in that
the inclination is determined by measuring and comparing the wheel loads at at least one wheel bearing (10', 12') of the motor vehicle to the left and right of the center line of the vehicle (10).

**4.** The brake system as claimed in any one of the preceding claims
**characterized** in that
the threshold value is adjusted more sensitively as the inclination of the motor vehicle becomes greater.

**5.** The anti-lock brake system for single-track motor vehicles (10) to measure the rotational behavior of the wheels of the vehicle and then to lower, maintain, or raise at a smaller gradient than before the brake pressure of the brake at a wheel being retarded if the rotational retardation and/or the slip of said braked wheel surpass(es) given threshold values,
**characterized** in that
a means (10', 12') for measuring the wheel loads determines the transverse acceleration of the motor vehicle (10), and that at least one threshold value is changed if a transverse acceleration occurs at the vehicle (10).

**6.** The brake system as claimed in claim 5
**characterized** in that
the transverse acceleration is determined by separately measuring and comparing the wheel loads at at least one wheel bearing (10', 12') of the motor vehicle to the left and right of the center line of the vehicle (10).

7. The brake system as claimed in claim 5 or claim 6 **characterized** in that the threshold value is adjusted more sensitively as the transverse acceleration of the vehicle becomes greater.

8. The brake system as claimed in any one of the preceding claims **characterized** in that the course in time of the position of the handle bar of the vehicle is measured (18) and the presence of an inclination and/or transverse acceleration of the motor vehicle (10) is determined in response to the same.

9. The brake system as claimed in any one of claims 3, 5, 6, 7 or 8 **characterized** in that the wheel loads are determined in response to pressures measured by pressure sensors (10', 12').

10. The brake system as claimend in any one of claims 3, 5, 6, 7, 8 or 9 **characterized** in that load sensors (10', 12') serve to measure the wheel loads.

**Revendications**

1. Dispositif de freinage à anti-blocage pour véhicules à moteur à voie unique (10), avec lequel le comportement en rotation des roues du véhicule est mesuré, puis, si la décélération et/ou le patinage d'une roue freinée dépasse, ou dépassent, des valeurs de seuil données à l'avance, la pression de freinage sur le frein de cette roue est abaissée, est maintenue ou est augmentée avec un gradient d'augmentation plus faible que précédemment, caractérisé en ce que l'inclinaison du véhicule à moteur (10) par rapport à la chaussée (12) est mesurée, et au moins une valeur de seuil est déterminée en fonction de cette inclinaison.

2. Dispositif de freinage suivant la revendication 1, caractérisé en ce que l'inclinaison est mesurée avec au moins un dispositif de mesure de distance (S$_1$, S$_2$), fixé sur le véhicule à moteur (10).

3. Dispositif de freinage suivant la revendication 1, caractérisé en ce que, pour déterminer l'inclinaison, sur au moins l'un des paliers de roue (10', 12') du véhicule, les charges sur la roue à gauche et à droite de la ligne médiane du véhicule, sont mesurées et comparées entre elles.

4. Dispositif de freinage suivant l'une des revendications précédentes, caractérisé en ce que la valeur de seuil est réglée de façon plus sensible si l'inclinaison du véhicule augmente.

5. Dispositif de freinage à anti-blocage pour véhicules à moteur à voie unique, dispositif avec lequel le comportement en rotation des roues du véhicule est mesuré, puis, si la décélération de la rotation et/ou le patinage d'une roue freinée dépasse, ou dépassent, des valeurs de seuil données à l'avance, la pression de freinage sur le frein de cette roue est abaissée, est maintenue ou est augmentée avec un gradient d'augmentation plus faible que précédemment, caractérisé en ce que l'accélération transversale du véhicule (10) est déterminée par un dispositif (10', 12') destiné à mesurer les charges sur les roues, et en ce qu'à l'apparition d'une accélération transversale sur le véhicule, au moins une valeur de seuil est modifiée.

6. Dispositif de freinage suivant la revendication 5, caractérisé en ce que, pour la détermination de l'accélération transversale, sur au moins l'un des paliers de roue (10', 12') du véhicule, les charges sur la roue sont mesurées séparément à gauche et à droite de la ligne médiane du véhicule, et comparées entre elles.

7. Dispositif de freinage suivant la revendication 5 ou la revendication 6, caractérisé en ce que la valeur de seuil est réglée de façon plus sensible si l'accélération transversale du véhicule augmente.

8. Dispositif de freinage suivant l'une des revendications précédentes, caractérisé en ce que le variation dans le temps de la position d'un guidon du véhicule est mesurée (18) et que l'existence d'une inclinaison et/ou d'une accélération transversale du véhicule est déterminée en fonction de cette variation.

9. Dispositif de freinage suivant l'une des revendications 3, 5, 6, 7 ou 8, caractérisé en ce que les charges sur les roues sont déterminées en fonction de pressions mesurées au moyen de détecteurs de pression (10', 12').

10. Dispositif de freinage suivant l'une des revendications 3, 5, 6, 7, 8 ou 9, caractérisé en ce que, pour mesurer les charges sur les roues, on se sert de détecteurs de charge (10', 12').

FIG.1

FIG.2

$l_1 < l_2$

13

FIG. 3

# FIG.4

# FIG.5

FIG.6A

FIG.6B

FIG.7A

FIG.7B

FIG.7C

17

# FIG.8

# FIG.9